# EUROPEAN PATENT APPLICATION

(11) **EP 4 529 812 A1**
(43) Date of publication of application: **02.04.2025**
(21) Application number: 23200145.3
(22) Date of filing: 27.09.2023
(51) Int. Cl.: A47J 31/00, A47J 31/36, A47J 31/52

(54) **A METHOD FOR PREPARING A BEVERAGE SUCH AS COFFEE AND A BEVERAGE BREWING MACHINE FOR PREPARING A BEVERAGE**

(71) Applicant: Versuni Holding B.V., 5656 AE Eindhoven (NL)
(72) Inventor: TIBBE, Tim Gerard, 5656 AE Eindhoven (NL); LOOPSTRA, Kasper Roelof, 5656 AE Eindhoven (NL); BERENDS, Erik, 5656 AE Eindhoven (NL)
(74) Representative: Vollering, Stefanus Franciscus Maria

(57) **Abstract**

A method for preparing a beverage such as coffee from an ingredient such as ground coffee using a beverage making machine. The machine comprises a brewing chamber having an inlet and an outlet, a pump and a fluid connection extending between the pump and the inlet. The pump is of a type which, in use, is operated by an AC-voltage wherein each cycle of the AC voltage causes the pump to make one stroke wherein a predetermined amount of liquid is released by the pump, the AC-voltage having a cycle time T. The method comprises the following steps:
(b) feeding a liquid such as water under pressure by means of the pump and via the fluid connection and the inlet towards and into the ingredient in the brewing chamber;
(c) interrupting the pump for a time period ts, wherein ts lays in a time-interval of 0.02-0.9 seconds, preferably between 0.4-0.85 seconds, more preferably between 0.6 and 0.8 seconds and wherein ts= n1^{∗}T wherein n1 is an integer larger than 1;
(d) resuming the operation of the pump for a time tr wherein tr is smaller than ts and tr=n2^{∗}T wherein n2 is an integer larger than 0 and smaller than n1;
(e) repeating a combination of first step (c) and subsequently step (d) for N times wherein N is an integer larger than 1; and
(f) after step (e) continuing the operation of the pump.

## Description

The present invention relates to a method for preparing a beverage such as coffee from an ingredient such as ground coffee using a coffee making machine comprising a brewing chamber having an inlet and an outlet, a pump and a fluid connection extending between the pump and the inlet, the method comprising filling the brewing chamber with the ingredient, prewetting the ingredient, opening the outlet of the brewing chamber (e.g. under the influence of fluid pressure inside the brewing chamber) if the outlet of the brewing chamber is closed, and letting flow a liquid such as water through the brewing chamber for brewing the beverage.

The invention also relates to a beverage brewing machine for preparing a beverage such as coffee from an ingredient such as ground coffee, the machine comprising a brewing chamber having an inlet and an outlet, a pump, a fluid connection extending between the pump and the inlet and a control circuitry for controlling the pump, wherein the machine is arranged for, in use, receiving or loading the ingredient into the brewing chamber such that the ingredient is positioned in a fluid path extending in the brewing chamber from the inlet to the outlet; wherein the machine is further arranged for prewetting the ingredient, opening the outlet of the brewing chamber (e.g. under the influence of fluid pressure inside the brewing chamber) if the outlet is closed, and letting flow a liquid such as water through the brewing chamber for brewing the beverage.

Such a method is known in relation to a fluid coffee machine from EP2001343B1. According to EP 2001343B1 a standard and non-expensive pump is used. The pump is used for prewetting the ingredient in the capsule by means of a pressurised liquid. The pump is further used for keeping the capsule pressurised (blooming phase of the prewetting), for opening an outlet side of the capsule by means of a pressurised liquid, and for brewing a beverage by means of an increased pressurised liquid. These different phases require different fluid pressures respectively. If the fluid pressure would be too high during prewetting there is a risk that the outlet side of the capsule or brewing chamber is opened too early, in case where the capsule, respectively brewing chamber is of a type that is closed at its outlet side. As a result, the brewing process starts and the prewetting phase will be early terminated. If the fluid pressure during the prewetting phase is too low, prewetting may not have been sufficient on the moment in time that brewing is started. A similar problem may occur with capsules, respectively brewing chambers that are open at their outlet from the start, for example in case where a brewing chamber outlet is formed by or comprises a septum with a small orifice or a duckbill valve, or in case where a capsule outlet is covered with filtering paper or perforated foil. In such cases, prewetting may not have been sufficient on the moment in time that liquid starts flowing out of the capsule or brewing chamber. During prewetting the interaction between the liquid and the ingredient may not result in optimal prewetting of the ingredient itself.

The object of the invention is to improve the known method and machine on at least one aspect.

The method according to the invention is characterized in that the pump is of a type which, in use, is operated by an AC-voltage wherein each cycle of the AC voltage causes the pump to make one pump cycle (hereinafter also referred to as stroke) wherein a predetermined amount of liquid is released by the pump, the AC-voltage having a cycle time T, the method comprising in succession comprising the following steps:
(a) receiving or loading the ingredient into the brewing chamber such that the ingredient is positioned in a fluid path extending in the brewing chamber from the inlet to the outlet;
(b) feeding a liquid such as water under pressure by means of the pump and via the fluid connection and the inlet towards and into the ingredient in the brewing chamber;
(c) interrupting the pump for a time period ts, wherein ts lays in a time-interval of 0.02-0.9 seconds, preferably between 0.4-0.85 seconds, more preferably between 0.6 and 0.8 seconds and wherein ts= n1^{∗}T wherein n1 is an integer larger than 1;
(d) resuming the operation of the pump for a time tr wherein tr is smaller than ts and tr=n2*T wherein n2 is an integer larger than 0 and smaller than n1;
(e) repeating a combination of first step (c) and subsequently step (d) for N times wherein N is an integer larger than 1; and
(f) after step (e) continuing the operation of the pump wherein optionally - if the brewing chamber is closed at its outlet- the outlet of the brewing chamber is opened, for instance under the influence of the pressure of the liquid in the brewing chamber,
wherein the beverage is brewed by means of an interaction between the ingredient and the liquid in the brewing chamber, and wherein the brewed beverage flows from the brewing chamber via its outlet.

The object of step (b) is to make the ingredient in the brewing chamber wet and the object of steps (c)-(e) (also referred to as blooming phase of the prewetting phase) is to keep the ingredient wet at a desired fluid pressure. Because of the selected type of pump, the desired accurate pressure control (specifically in the prewetting phase during steps (c)-(e)) can be realised. Specifically due to the selected values for ts and tr a balance between pressurised flow and interruption is obtained which contributes to a desired prewetting and blooming. During the steps (c)-(e) (i.e. the blooming phase) the ingredient is wet and pressure is maintained around a desired level in the brewing chamber. More specifically, the object of step (c) is to keep the ingredient wet and at rest with a certain fluid pressure during a certain desired length of time. The pressure may however slowly decrease during this step (c). The object of step (d) is to slightly increase the pressure in the brewing chamber and maintain or bring back the pressure in the brewing chamber at a desired level. Because N is larger than 1 a prewetting phase with slightly varying pressure in the brewing chamber is obtained which also contributes to a desired prewetting. Preferably a desired type of prewetting is not only a surrounding of an ingredient particle such as ground coffee by liquid but also an absorption of the liquid into such an ingredient particle. A desired type of prewetting is also an interaction of the liquid with the majority of the ingredients in the brewing chamber, preferably more than 50%, more preferably more than 70%. If there is a large penetration depth of the liquid into the brewing chamber towards its outlet side this may come with the risk that -if the brewing chamber's outlet is closed- the outlet may become opened due to relatively high fluid forces acting on the outlet. If there is a large penetration depth of the liquid into the brewing chamber towards its outlet side this may come with the risk that -if the brewing chamber's outlet is open - an undesired amount of liquid may flow from the brew chamber's outlet during the prewetting phase. Due to a value of tr being smaller than ts the early opening of the outlet can be avoided. Due to a value of N > 1 a sufficient penetration depth of the liquid towards the outlet side can be obtained.

Preferably n1, n2 and N are selected such that during prewetting in steps (b)-(e) no liquid flows from the brewing chamber via its outlet given the value of T and the amount of liquid which is released during one stroke of the pump.

Preferably ts lays in a time-interval of 0.75-0.85 seconds. The advantage is that the forces acting on the outlet can remain sufficiently small to avoid early opening of the brewing chamber.

Preferably tr= 0.01-0.04 seconds. Again, the advantage is that the forces acting on the outlet can remain sufficiently small to avoid early opening of the brewing chamber.

Preferably T lays in the range of 0.01-0.04 seconds, more preferably T=0.02 seconds or 0.0167 seconds. The latter are values which can practically be derived from existing grids (such as in the EU or US).

Preferably n1= 20-45, more preferably 30-44, more preferably 35-40 such as 30, 35 or 40. Furthermore preferably n2 = 1-4, preferably 1. The selection of these values provides the advantages of the above discussed values of ts and tr. As explained the values of ts and tr together with the amount of liquid which is pumped during tr can be controlled very accurately due to the selection and the use of the type of pump as discussed.

n1 may have one and the same value in each of the carried out steps (c) and/or n2 may have one and the same value in each of the carried out steps (d). Alternatively, in at least two steps (c) of the carried out steps (c) n1 may have different values respectively and/or in at least two steps (d) of the carried out steps (d) n2 may have different values respectively.

Preferably in step (b) a predetermined amount of liquid is pumped towards and into the brewing chamber. This amount is sufficient for pre-wetting the ingredient in the brewing chamber. It is sufficient for building up a required pressure at the inlet of the brewing chamber. At the same time it is avoided that the brewing chamber's outlet is opened under the influence of liquid pressure or -in case the brewing chamber has an outlet that is open from the start- that liquid flows out of said open outlet during prewetting, especially during the blooming phase.

Preferably the pump is activated for a time ti, wherein ti lays in the range of 1-15 seconds, preferably 2-4 seconds. The time ti is sufficient for building up a required pressure at the inlet of the brewing chamber for subsequently starting step (c). During step (b) the pump may for instance make 50-750, more specifically 400-200 strokes. Preferably, during one stroke the pump pumps 0.01-0.15 ml, more preferably 0.07 ml liquid. The inner volume of the brewing chamber (this is the volume which may be filled with the ingredient and the liquid) may be in the range of 10-40 ml. During step (f) 15-400 ml, preferably 20-250 ml, more preferably 20-120 ml beverage may be brewed.

N may lay in the range of 1-80, preferably 1-30, more preferably in the range of 5-15. Steps (c)-(e) may take 3-35 seconds, preferably 6-20 seconds, more preferably 8-12 seconds. This proofs to be a length of time to allow an effective prewetting of the ingredient. During steps (c)-(e) the fluid pressure at the inlet side of the brewing chamber may be 0.5-8 bar, preferably 2,5-5 bar. This proofs an effective pressure to be used in the prewetting phase.

Furthermore it is preferred that during step (f) the pressure raises relative to the pressure at the inlet side of the brewing chamber during steps (c)-(e), preferably to 4-12 bar, more preferably to 5-7 bar. This provides a good extraction of the ingredient in the form of ground coffee wherein a balanced taste and crema layer can be obtained if the beverage is collected in a cup. Preferably during step (b) and/or (f) the pump is operated uninterrupted. This means that during step (f) it operates preferably at full power. Alternatively, in step (b) the pump may be at least one time interrupted.

The machine according to the invention is characterized in that the pump is of a type which, in use, is operated by an AC-voltage generated by the control circuitry wherein each cycle of the AC voltage causes the pump to make one stroke wherein a predetermined amount of liquid is released by the pump, the AC-voltage having a cycle time T, the control circuitry being arranged such that in use the pump is controlled by the AC voltage as follows:
(b) by means of the pump a liquid such as water is fed under pressure via the fluid connection and the inlet towards and into the brewing chamber;
(c) the pump is interrupted for a time period ts, wherein ts lays in a time-interval of 0.02-0.9 seconds, preferably between 0.4-0.85 seconds, more preferably between 0.6 and 0.8 seconds and wherein ts= n1^{∗}T wherein n1 is an integer larger than 1;
(d) the operation of the pump is resumed for a time tr wherein tr is smaller than ts and tr=n2*T wherein n2 is an integer larger than 0 and smaller than n1;
(e) a combination of first step (c) and subsequently step (d) is repeated for N times wherein N is an integer larger than 1; and
(f) after step (e) the operation of the pump is continued, wherein optionally -if the brewing chamber's outlet is closed during the previous steps- the outlet of the brewing chamber is opened, for instance under the influence of the pressure of the liquid in the brewing chamber, and wherein the beverage is brewed from the interaction between the liquid and the ingredient in the brewing chamber, and wherein the brewed beverage flows from the brewing chamber via its outlet.

If a brewing chamber is used with a closed outlet, a desired prewetting can be performed by the machine with a reduced risk that the outlet is opened early for the same reasons as discussed above for the method. The machine can however also be used for prewetting the ingredient in a brewing chamber from which the outlet is already open before the ingredient is received or loaded into the brewing chamber. In that case the desired type of prewetting as discussed above (for example penetration depth and/or absorption of liquid into the ingredient) can also be realised with the same machine.

The control circuitry may be arranged such that, in use, in step (b) the pump is operated continuously or wherein in step (b) the pump is at least one time interrupted.

The control circuitry may be arranged such that, in use, in each of the carried out steps (c) n1 has one and the same value and/or wherein in each of the carried out steps (d) n2 has one and the same value. Alternatively, the control circuitry may be arranged such that, in use, in at least two steps (c) of the carried out steps (c) n1 has different values respectively and/or wherein in at least two steps (d) of the carried out steps (d) n2 has different values respectively.

The invention will now be discussed further with reference to the attached non limiting drawings wherein:
Figure 1 schematically shows an embodiment of a machine according to the invention comprising a brewing chamber loaded with an ingredient to carry out a method according to the invention;
Figure 2 schematically shows a pressure-time diagram wherein the pressure is a pressure of water at position P in Figure 1 during use of the machine of figure 1 with a first amount of ingredient as shown in figure 1; and
Figure 3 schematically shows a pressure-time diagram wherein the pressure is a pressure of water at position P in Figure 1 during use of the machine of figure 1 with a second amount of ingredient.

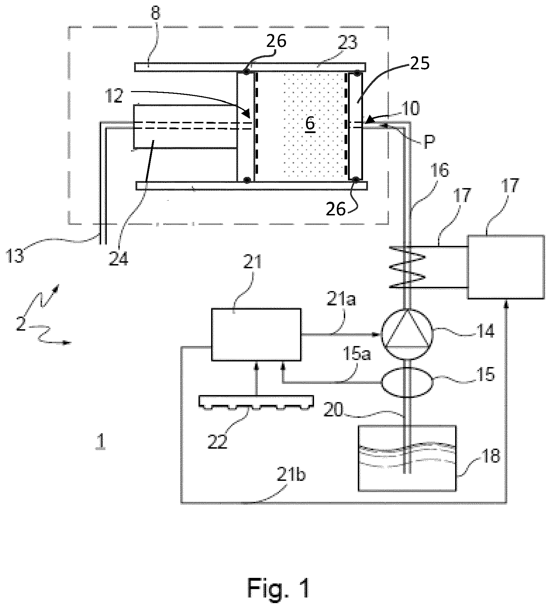

In figure 1 a system is provided with reference number 1. The system is provided with a beverage brewing machine 2 for preparing a beverage from a brewing chamber 8 filled with an ingredient such as ground coffee 6. The brewing chamber 8 has an inlet 10 and an outlet 12. Furthermore, a spout 13 is provided for collecting a beverage flowing through the outlet 12. The machine 2 further comprises a pump 14 and a fluid connection 16 extending between an outlet side of the pump and the inlet 10. The machine comprises in this example a reservoir 18 which can be filled with water and a further fluid connection 20 extending between the reservoir 18 and an inlet side of the pump 14. Heating means 17 are provided for heating a liquid flowing through the fluid connection 16. The machine is further provided with a control circuitry 21 for controlling the pump 14. Also the machine comprises in this example a control-panel 22 for providing instructions to the control circuitry 21 by a user. The pump 14 is of a type which, in use, is operated by an AC-voltage signal generated by the control circuitry 21 wherein each cycle of the AC voltage signal causes the pump to make one stroke wherein a predetermined amount of liquid is released by the pump. The AC-voltage has a cycle time (also known as repetition time or period) T. In this example T=0.02 seconds. The pump 14 may for example be a well-known positive displacement pump. The pump which may be used is of a type also known by the name vibration pump, vibe pump and solenoid pump.

In this example the brewing chamber 8 comprises a cylinder 23 for receiving the ingredient 6 and a closing piston 24 for closing an open end of the cylinder 23. The other end of the cylinder 23 may be provided with a second piston 25 that may serve as ejection piston, to automatically eject the used ingredient 6 from the cylinder 23 at the end of a brewing cycle, in a known manner. Alternatively, the cylinder 23 may be embodied as a portafilter, which at the end of each brewing cycle can be manually removed from the machine 2 for emptying. Appropriate sealing means 26 may be provided between the respective pistons 24, 25 and the cylinder 23.

In the illustrated example the outlet 12 is provided in the closing piston 24 and the inlet 10 is provided in the opposite end of the cylinder 23. In an alternative embodiment (not shown) the location of the inlet 10 and outlet 12 may be reversed, that is, the inlet 10 may be provided in the closing piston 24 and the outlet 12 may be provided in the cylinder 23. In such case, the closing piston 24 preferably is provided with a liquid distribution head, to allow even distribution of the liquid over the ingredient 6. Furthermore, the inlet 10 and/or the outlet 12 may be covered by a filter (shown in dashed lines in figure 1), to prevent ingredient 6 from exiting the cylinder 23 via inlet 10 or outlet 12.

The position of the closing piston 24 may be varied so that the inner volume of the brewing chamber 8 (this is the volume which may be filled with the ingredient 6 and the liquid) may be varied to accommodate for different amounts of ingredient 6. The inner volume of the brewing chamber may for instance be varied in the range of 10-40 ml.

In this example the cylinder 23 can be moved from a position below a grinder outlet (not shown) for receiving ground coffee, to a position below the closing piston 24 (away from the grinder outlet). Subsequently the cylinder 23, the closing piston 24, or both can be moved towards each other to close the brewing chamber 8. The opening and closing of the brewing chamber 8 may be performed manually, for example by means of a lever. Alternatively opening and closing of the brewing chamber may be carried out by means of an electromotor or a hydraulic actuator, controlled by the control circuitry 21.

In an alternative embodiment (not shown), the cylinder 23 may be a portafilter that can be manually removed from the machine after each brewing cycle, in order to remove the used coffee puck. Once emptied, the portafilter can be filled with fresh coffee grounds and manually re-installed into the machine. Alternatively, if the machine includes an integrated grinder, the empty portafilter may be re-installed in the machine, where it then can be loaded with fresh coffee grounds from the grinder.

The working of the machine for preparing a beverage is as follows.

In use, in a step (a) the ingredient 6 is loaded into the brewing chamber 8 in any of the ways described above, such that the ingredient 6 is positioned in a fluid path extending in the brewing chamber 8 from the inlet 10 to the outlet 12.

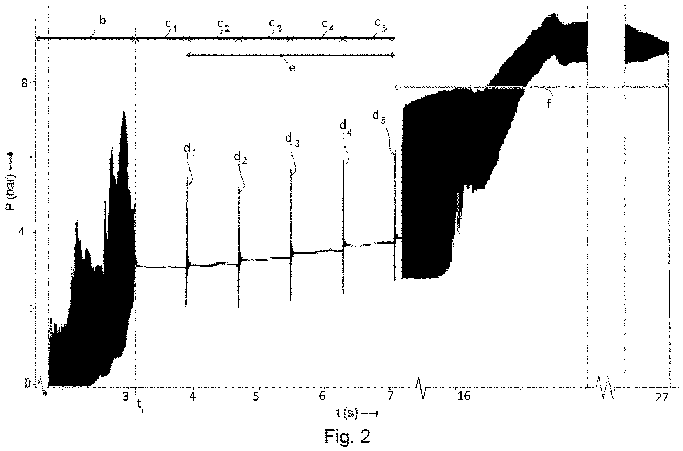

Next, the control circuitry 21 controls pump 14 via control line 21a by means of the AC voltage as follows:
In a step (b) by means of the pump 14 liquid, more specifically water under pressure is fed from the reservoir 18 via the fluid connections 20 and 16 and the inlet 10 towards and into the brewing chamber 8. As a result of the action of the pump 14 the water pressure at point P in figure 1 will change as is shown in figure 2. Also, the control circuitry 21 may control the heating means 17 via control line 21b so that the water flowing through the fluid connection 16 is heated to a desired temperature, for example 90 degrees Celsius. Other values are possible. It is also possible to not heat the water, e.g. by leaving the heater 17 inactivated.

In figure 2 step (b) starts at t=0 seconds and ends at t=tᵢ seconds. It is noted that in this document a value of fluid pressure downstream of the pump 14 is the fluid pressure which can be measured outside the brewing chamber close to the inlet 10 thereof and therefore close to the interior of the brewing chamber 8. In this example such pressure values are defined at position P. It is assumed that this is the pressure at the inlet 10 of the brewing chamber.

In a step (c₁) the pump 14 is interrupted for a time period ts, wherein ts lays in a time-interval of 0.02-0.9 seconds, preferably between 0.4-0.85 seconds, more preferably between 0.6 and 0.8 seconds and wherein ts= n1^{∗}T wherein n1 is an integer larger than 1. In this example n1=40. This means ts=0.8 seconds

In a step (di) the operation of the pump 14 is resumed for a time tr wherein tr is smaller than ts and tr=n2*T wherein n2 is an integer larger than 0 and smaller than n1. In this example n2=2 so that tr=0.04 seconds. It also follows that step (c₁) plus step (di) takes 0.84 seconds.

In a step (e) a combination of first step (c₁) and subsequent step (di) is repeated for N times wherein N is an integer larger than 1. In this example N=4 so that all steps (cᵢ) and (dᵢ) take 5*0.84 seconds. This makes 4.2 seconds.

In a step (f) after step (e) the operation of the pump 14 is continued by submitting the uninterrupted AC voltage signal to the pump. This means the pump 14 operates at full power within the machine. Thereby the fluid pressure in the brewing chamber will increase. This may cause outlet 12 to open. A beverage is brewed from the interaction between the liquid and the ingredient 6. The brewed beverage flows from the brewing chamber via the outlet 12 and is dispensed from the machine via spout 13. The above discussed control of the pump 14 has the following result.

In this example in step (b) the pump may for instance be operated for tᵢ=3 seconds. This period is indicated by arrow b in figure 2. Thus, during this tᵢ=3 seconds the pump receives 50 control pulses from the AC voltage signal in one second and thereby in total 3*50=150 control pulses. Each pulse has as an effect that the pump 14 makes one stroke as discussed above. In step (b) the pump submits 150 times the predetermined amount of water relating to one stroke towards the brewing chamber. The predetermined amount of liquid (water in the example) relating to one stroke is in this example 0.07 ml. As a result about 10.5 ml of water is pumped towards and into the brewing chamber and the average pressure at position P increases. Because the pump makes 50 strokes per second during step (b) the pressure at position P has the character of a pulsating pressure with a certain bandwidth. After step (b) the ingredient in the brewing chamber has become wet due to the water pumped towards and into the brewing chamber. Because the inner volume of the brewing chamber is in this example about 20 ml, the ingredient becomes wet without liquid flowing from the brewing chamber outlet 12.

Step (c) starts after t=3 seconds.

In this example ts=0.8 seconds, T=0,02 seconds (50 Hz) and n1=40 and n2=1. This means that the pump is interrupted in step (c) for 0.8 seconds and that in step (d) the pump is resumed for tr= 0.02 seconds. Thus in step (d) the pump makes only one stroke. As shown in figure 2 during the first step (c), indicated with c1 the pressure in the brewing chamber slightly decreases and no water is fed into the brewing chamber. Because the pump 14 is in rest the pressure at position P has no longer a pulsating character. During the first step (d), indicated in figure 2 with d1, the amount of water related to one stroke is submitted towards the brewing chamber with the result that after the first step (d) the pressure is slightly increased again. Thus, a combination of step (c) and (d) has as a result that the pressure at position P and thereby in the brewing chamber 8 is maintained and water remains in the brewing chamber without the outlet 12 of the brewing chamber being forced open or, if the outlet 12 is of the open type, without water exiting the brewing chamber via the outlet 12, because the water pressure in the brewing chamber remains low enough to prevent this. A combination of step (c) and (d) has as a result that the ingredient is prewetted during step (c) and step (d), thus during 0.82 seconds.

After first step (d) the pump 14 is interrupted again during a second step (c) indicated with c2. During this period the pressure again slightly decreases. Subsequently after the second step (c) the pump is activated again with one stroke in a second step (d) indicated with d2. Again after the second step (d) the pressure is slightly increased. Again during the combination of second step (c) and second step (d) the ingredient of the brewing chamber is prewetted during 0.82 seconds .

In this example after first step (c) and (d) this sequence is repeated N=4 times. Thus 5 combinations of steps (c) and (d) are executed during 5 *0.82 = 4.1 seconds. The result is that the ingredient is prewetted during 4.1 seconds during which no water exits the brewing chamber. The pressure at position P and thereby the pressure in the brewing chamber remains in this example at a level of about 3.5 bar, which is a favourable pressure for prewetting the ingredient.

After step (e) the operation of the pump 14 is resumed in step (f) without any interruption for brewing the beverage. Thus, the pump 14 operates at full power in step (f). The pressure at position P and thereby in the brewing chamber 8 will increase. Again the pressure has a pulsating character during step (f). Once the pressure reaches about 7 or 8 bar water starts to flow out the brewing chamber (in the example of figure 2 at about t=16 seconds). The pressure at position P will further increase to a level above 8 bar, for example to 10 bar. Thus, within the period associated with step (f) water flows through the brewing chamber 8 for preparing the beverage. The beverage flows via outlet 12 and the spout 13 into a container such as a cup 44. The total duration of step (f) may for instance be around 20 seconds. This means that in this period about 70 ml beverage will be produced (0.07 (ml) * 50 (Hz) *20 (seconds). Due to the prewetting of the ingredient during 4.1 seconds at a pressure level of about 3.5 bar the beverage will have excellent tasting characteristics. As discussed n1, n2 and N are selected such that during prewetting in steps (c)-(e) the brewing chamber is not opened at its outlet side or at least no water is exiting from the brewing chamber via its outlet 12, given the value of T and the amount of liquid which is pumped by the pump during one stroke. Also during steps (c)-(e) prewetting of the ingredient can take place during a sufficient length of time at a favourable pressure. Other values of the variables discussed above can however be selected.

According to a more general approach the following examples may be applied too. T may for example be 0.0167 seconds so that the AC voltage comprises 60 control pulses in one second. The value of ts may lay in a time-interval of 0.02-0.9 seconds, preferably 0.4-0.85 seconds, more preferably 0.6-0.8 seconds. The value of tr may lay in an interval of 0.01-0.04 seconds. T may lay in the range of 0.01-0.04 seconds. The value of n1 may lay in the interval of = 20-45. The value of n2 may lay in the interval of 1-4. N may lay in the range of 1-80, preferably 1-30, more preferably in the range of 5-15. Steps (c)-(e) (meaning all steps (c)-(e) in combination) may take 3-35 seconds, preferably 6-20 seconds, more preferably 8-12 seconds. During steps (c)-(e) in combination the pressure at the inlet side of the brewing chamber may be 0.5-8 bar, preferably 2.5-5 bar. In step (b) the pump may be activated for a time ti, wherein ti lays in the range of 1-15 seconds, preferably 2-4 seconds. In step (b) the pump may make 50-750 strokes, preferably 100-200 strokes. During steps (c)-(e) the fluid pressure may lay in the range of 0.5-8 bar, preferably 2.5-5 bar. During step (f) the pressure at the inlet side of the brewing chamber may raise relative to the pressure at the inlet side of the brewing chamber during steps (c)-(e), preferably to 4-12 bar, more preferably to 5-7 bar. During one stroke the pump may pump 0.01-0.15 ml liquid. During step (f) 15-400 ml, preferably 20-250 ml, more preferably 20-120 ml beverage may be brewed.

In the above example the brewing chamber was loaded with ground coffee. The ingredient may however also comprise other substances such as tea.

In a special embodiment (illustrated in figure 1) the machine 2 is provided with a flowmeter 15 for measuring the flowrate of the liquid which is pumped by the pump towards the inlet 10 of the brewing chamber 8. The flowmeter is communicatively connected to the control circuitry 21 by means of a control line 15a for submitting, in use, a signal to the control circuitry representing the measured flowrate. In this case the flowmeter 15 measures the flowrate of liquid flowing through the further fluid connection 20 upstream of the pump. This equals the flowrate of liquid flowing through the fluid connection 16 towards the inlet 10. Alternatively, the flowmeter 15 could have been positioned downstream of the pump 14 to measure the flowrate of liquid flowing through the fluid connection 16. The control circuitry 21 may be arranged, in use, to control, the pump based on the information provided by the flowmeter 15 such that in steps (b)-(f) a predetermined amount of liquid is pumped by the pump towards the inlet 10 of the brewing chamber 8 (thus the flowmeter is part of a feedback loop). Thus this means that although during steps (c)-(e) the flow of liquid is purely time controlled without using the information provided by the flowmeter 15 (also referred to as dead reckoning), the overall amount of liquid pumped by the pump 14 is measured by the flowmeter and used by the control circuitry 21 to control the total amount of liquid pumped for preparing a beverage. The use of dead reckoning for carrying out steps (c)-(e) is due to the low flow-rate during these steps more accurate than using the flowmeter 15 to control these steps. Additionally or alternatively, the control circuitry 21 may be arranged to control the pump 14 in step (b) based on the information provided by the flowmeter 15, such that a predetermined amount of liquid is pumped by the pump towards the inlet of the brewing chamber (again the flowmeter and the control circuitry form a feedback loop). Thus, in that case the amount of liquid which is used for prewetting may be based on a measurement of the flowmeter 15. Additionally or alternatively, the control circuitry 21 may be arranged for controlling the pump 14 based on the information provided by the flowmeter 15 such that in step (f) a predetermined amount of liquid is pumped by the pump towards the inlet 10 of the brewing chamber 8 (again the flowmeter and the control circuitry form a feedback loop). Alternatively steps (b)-(f) may each be time controlled without the use of a feedback loop wherein the flowmeter 15 may thus be deleted.

In the above examples the control circuitry 21 is arranged such that, in use, in each of the carried out steps (c) n1 has one and the same value. In this example n1=40. In the above example the control circuitry is also arranged such that, in use, in each of the carried out steps (d) n2 has one and the same value. In this example n2=1. In table 1 below the characteristics of steps (c)-(e) with respect to the value of n1 and n2 in the example are summarised.

**Table 1:**

| Steps (c) + (d) | n1 | n2 |
|---|---|---|
| First | 40 | 1 |
| Second | 40 | 1 |
| Third | 40 | 1 |
| Fourth | 40 | 1 |
| Fifth | 40 | 1 |

However, according to the invention it is also possible that the control circuitry 21 is arranged such that, in use, in at least two steps (c) of the carried out steps (c) n1 has different values respectively. Also or alternatively, it is possible that the control circuitry is arranged such that, in use, in at least two steps (d) of the carried out steps (d) n2 has different values respectively. This is shown in a second example below. The second example is shown in table 2, wherein N=3.

The selection of mutually different steps (c) and mutually different steps (d) respectively, can be utilised to optimise in cup quality parameters such as crema quality and extraction yield. Additionally, such selection can also be used to shift the taste profile by influencing the density/porosity of the ingredient bed in the brewing chamber and/or by reducing interstitial space between the ingredient particles so as to change the balance between primary and secondary extraction in case the ingredient is ground coffee.

**Table 2:**

| Steps (c)+(d) | n1 | n2 |
|---|---|---|
| First | 10 | 1 |
| Second | 30 | 1 |
| Third | 10 | 1 |
| Fourth | 30 | 1 |

In the second example in the first sequence of steps (c) and (d) n1=10. In the second sequence of steps (c) and (d) (this is the first time that steps (c) and (c) are repeated in step (e)) n1=30. In the third sequence of steps (c) and (d) (this is the second time that steps (c) and (d) are repeated in step (e)) n1=10. In the fourth sequence of steps (c) and (d) (this is the third time that steps (c) and (d) are repeated in step (e)) n1=30. In the second example in each of the four sequences of steps (c)+(d) n2=1. In the second example n2 could also have other values such as for example n2 = 2, 3 or 4.

In the second example the sequence with n1=10 may help to maintain the pressure in the brewing chamber at a relatively high level during the blooming phase (steps (c)-(e)) and during step (f) ingredient bed compaction within the brewing chamber may be increased, resulting in reduced channelling in the ingredient bed. Summarized, the second example may create a higher quantity of coffee crema and also higher solid levels.

In the second example the control circuitry 21 is arranged such that, in use, in at least two steps (c) of the carried out steps (c) n1 has different values respectively. As explained above, also or alternatively it is possible that the control circuitry is arranged such that, in use in at least two steps (d) of the carried out steps (d) n2 has different values respectively. This is demonstrated in a third example according to table 3, wherein N=3

**Table 3:**

| Steps (c)+(d) | n1 | n2 |
|---|---|---|
| First | 10 | 4 |
| Second | 30 | 1 |
| Third | 10 | 3 |
| Fourth | 30 | 1 |

In the third example in the first sequence of steps (c) and (d) n1=10 and n2=4. In the second sequence of steps (c) and (d) (this is the first time that steps (c) and (d) are repeated in step (e)) n1=30 and n2=1. In the third sequence of steps (c) and (d) (this is the second time that steps (c) and (d) are repeated in step (e)) n1=10 and n2=3. In the fourth sequence of steps (c) and (d) (this is the third time that steps (c) and (d) are repeated in step (e)) n1=30 and n2=1. Other variations are possible, for example the third example may be changed such that n1 has the same value in each of the four sequences such that only n2 may have different values in different sequences of steps (c) and (d).

To show the variations of possibilities a fourth example is shown in Table 4.

**Table 4**

| Steps (c)+(d) | n1 | n2 |
|---|---|---|
| First | 35 | 4 |
| Second | 30 | 4 |
| Third | 25 | 4 |
| Fourth | 20 | 3 |
| Fifth | 15 | 3 |
| Sixth | 10 | 3 |
| Seventh | 5 | 2 |
| Eighth | 3 | 2 |

In each of the above examples in step (b) the pump 14 may be continuously operated at full power. It is however also possible that the control circuitry 21 is arranged such that, in use, in step (b) the pump is at least one time interrupted. Thus, for example in a first portion of step (b) the pump may be operated continuously and in a following second portion of step (b) the pump is at least one time interrupted. Such variations also fall within the scope of the invention. It is also possible that between step (b) and the first step (c) the pump is operated, optionally with at least one interruption. It is also possible that between step (e) and step (f) the pump is operated, optionally with at least one interruption.

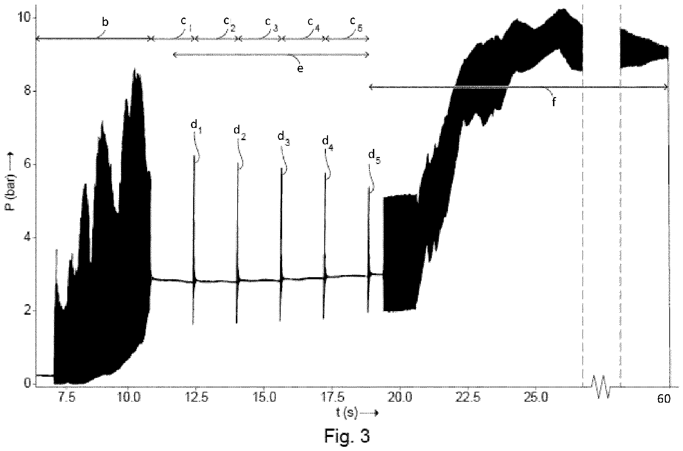

In the above examples the brewing chamber 8 is loaded with a fixed amount of ingredient 6. The stroke of the closing piston 24 and/or cylinder 23 may be fixed. In an alternative embodiment, the stroke of the closing piston 24 and/or cylinder 23 may be variable so that the brewing chamber 8 may have a variable internal volume for accommodating varying amounts of ingredient 6. The ingredient amounts may for instance be varied depending on a user selected recipe. For example, for larger and/or stronger recipes more ingredient 6 may be loaded into the brewing chamber 8. The amount of liquid that is fed through the ingredient in the brewing chamber during steps (b), (d), (e) and/or (f) may be varied accordingly. Also, the duration of step (b), (c), (d), (e) and/or (f) and/or the time period ti, ts, tr during which operation of the pump is activated, interrupted, respectively resumed again, may be varied in dependence of the ingredient amount inside the brewing chamber. The same applies for the other parameters associated with the respective steps (b)-(f), e.g. n1, n2, T, N and/or the fluid pressure at the inlet side of the brewing chamber: each of these parameters may be varied in dependence of the ingredient amount that has been loaded into the brewing chamber 8 during step (a).
As a result, the pressure time diagram may differ, as can be seen by comparing figure 2 and 3.

Figure 3 shows an example of a pressure-time diagram wherein the brewing chamber 8 is loaded with a second amount of ingredient 6 that is larger than the first amount of ingredient, used in the example of figure 2. The second amount of ingredient and the inner volume of the brewing chamber 8 is for example twice as big as that shown in figure 2, e.g. 40 ml. In figure 3 step (b) takes about 12 seconds, steps (c)-(e) take about 8 seconds (about twice as long as for the first amount of ingredient in figure 2) and step (f) takes about 40 seconds. Some parameters may be the same as for figure 2. For instance, T=0.02 and one stroke of the pump corresponds again to 0.07 ml. From this it follows that about 140 ml beverage will be prepared during step (f). Further for figure 3 n1, n2 and N which determine the prewetting process may be the same as for figure 2.

It will be clear that varying the prewetting and/or blooming phase parameters in dependence of the amount of ingredient that has been loaded inside the brewing chamber may also advantageously be applied in other methods for preparing a beverage without the limitations of present claim 1, and/or in other beverage brewing machines without the limitations of present claim 11. Therefore, according to an aspect of the invention, a method and/or machine 2 for preparing a beverage may be provided, wherein the machine comprises a brewing chamber 8 for receiving an amount of ingredient 6, for instance ground coffee (pre-packaged in a capsule or pod, or unpackaged, e.g. lose, freshly ground coffee), wherein the size of the brewing chamber 8 and/or the amount of ingredient 6 that during use is loaded into the brewing chamber 8 can be varied, and wherein the method, respectively machine includes a prewetting phase during which an amount of liquid, for instance water, is dosed onto the ingredient in the brewing chamber, wherein the amount of prewetting liquid that is dosed onto the ingredient in the brewing chamber is varied in dependence of the size of the brewing chamber and/or in dependence of the amount of ingredient that during use has been loaded into the brewing chamber. The beverage brewing machine may for instance be a coffee machine, more specifically a capsule machine, a pod machine, a fully automatic espresso machine with integrated grinder, a manual espresso machine with manually removable portafilter and optionally an integrated grinder, etc.

Besides varying the amount of prewetting liquid in dependence of the brewing chamber size / amount of ingredient inside the brewing chamber, other prewetting parameters may be varied, such as the duration of the prewetting phase, the duration of the blooming phase, the fluid pressure, the flow rate, the pump activation profile, and/or any of the other parameters as described before in relation to figures 1 to 3.

The machine 2 may comprise at least one sensor (not illustrated) for generating at least one signal which is indicative for the amount of ingredient 6 in the brewing chamber 8. The sensor may for instance monitor the stroke of the closing piston 24 and/or of cylinder 23 during closing thereof. Alternatively, the amount of ingredient 6 may be derived from instructions received from a user via control-panel 22, or - if the machine is provided with an integrated grinder- from data received from the grinder or received during dosing of the ingredient 6 into the brewing chamber 8.

Aforementioned sensor signal or the data regarding the amount of ingredient present in the brewing chamber 8 may be used by the control circuitry 21 for selecting the duration of the respective steps. For example, if the detected amount of ingredient 6 is small, the duration of step (b) and/or step (f) may for example be smaller than the duration of step (b), respectively (f) if the detected amount of ingredient is large. Steps (b) - (e) or (c) - (e) may be the same for the various amounts of ingredient but need not be the same. For example, the value of N may be smaller for smaller amounts of ingredient than for larger amounts of ingredient.

In the above example the liquid used is still water. However other liquids such as sparkling water, slightly salted water etc. may also be used.

## Claims

1. A method for preparing a beverage such as coffee from an ingredient (6) such as ground coffee using a beverage making machine (2) comprising a brewing chamber (8) having an inlet (10) and an outlet (12), a pump (14) and a fluid connection (16) extending between the pump and the inlet, wherein the pump is of a type which, in use, is operated by an AC-voltage wherein each cycle of the AC voltage causes the pump to make one stroke wherein a predetermined amount of liquid is released by the pump, the AC-voltage having a cycle time T, the method comprising the following steps:
(a) receiving or loading the ingredient into the brewing chamber such that the ingredient is positioned in a fluid path extending in the brewing chamber from the inlet to the outlet;
(b) feeding a liquid such as water under pressure by means of the pump and via the fluid connection and the inlet towards and into the ingredient in the brewing chamber;
(c) interrupting the pump for a time period ts, wherein ts lays in a time-interval of 0.02-0.9 seconds, preferably between 0.4-0.85 seconds, more preferably between 0.6 and 0.8 seconds and wherein ts= n1^{∗}T wherein n1 is an integer larger than 1;
(d) resuming the operation of the pump for a time tr wherein tr is smaller than ts and tr=n2*T wherein n2 is an integer larger than 0 and smaller than n1;
(e) repeating a combination of first step (c) and subsequently step (d) for N times wherein N is an integer larger than 1; and
(f) after step (e) continuing the operation of the pump so that the beverage is brewed by means of an interaction between the ingredient and the liquid in the brewing chamber and the brewed beverage flows from the brewing chamber (8) via its outlet (12).

2. The method according to claim 1, wherein n1, n2 and N are selected such that during prewetting in steps (b)-(e) no liquid flows from the brewing chamber (8) via its outlet (12) given the value of T and the amount of liquid which is released during one stroke.

3. The method according to any preceding claim, wherein tr= 0.01-0.04 seconds.

4. The method according to any preceding claim, wherein T lays in the range of 0.01-0.04 seconds, preferably wherein T=0.02 seconds or T=0.0167 seconds.

5. The method according to any preceding claim wherein steps (c)-(e) take 3-35 seconds, preferably 6-20 seconds, more preferably 8-12 seconds.

6. The method according to any preceding claim wherein during step (f) the pressure at the inlet side of the brewing chamber raises relative to the pressure at the inlet side of the brewing chamber during steps (c)-(e), preferably to 4-12 bar, more preferably to 5-7 bar.

7. The method according to any preceding claim wherein in step (b) the pump is activated for a time ti, wherein ti lays in the range of 1-15 seconds, preferably 2-4 seconds and/or wherein in step (b) a predetermined amount of liquid is pumped towards and into the brewing chamber.

8. The method according to any preceding claim wherein during one stroke the pump pumps 0.01-0.15 ml, preferably 0.07 ml liquid.

9. The method according to any preceding claim wherein during step (b) and/or (f) the pump is operated uninterruptedly.

10. The method according to any preceding claim wherein in steps (b)-(f) and/or step (b) and/or step (f) a predetermined amount of liquid is pumped towards the inlet of the brewing chamber.

11. A beverage brewing machine (2) for preparing a beverage such as coffee from an ingredient (6) such as ground coffee, the machine comprising a brewing chamber (8) having an inlet (10) and an outlet (12), a pump (14), a fluid connection (16) extending between the pump and the inlet and a control circuitry (21) for controlling the pump, wherein the machine is arranged for, in use, receiving or loading the ingredient into the brewing chamber such that the ingredient is positioned in a fluid path extending in the brewing chamber from the inlet to the outlet; wherein the machine is further arranged for prewetting the ingredient and letting flow a liquid, such as water through the ingredient in the brewing chamber for brewing the beverage, **characterized in that**, the pump is of a type which, in use, is operated by an AC-voltage generated by the control circuitry wherein each cycle of the AC voltage causes the pump to make one stroke wherein a predetermined amount of liquid is released by the pump, the AC-voltage having a cycle time/repetition time T, the control circuitry being arranged such that in use the pump is controlled by the AC voltage as follows:
(b) by means of the pump a liquid such as water is fed under pressure via the fluid connection and the inlet towards and into the brewing chamber;
(c) the pump is interrupted for a time period ts, wherein ts lays in a time-interval of 0.02-0.9 seconds, preferably between 0.4-0.85 seconds, more preferably between 0.6 and 0.8 seconds and wherein ts= n1^{∗}T wherein n1 is an integer larger than 1;
(d) the operation of the pump is resumed for a time tr wherein tr is smaller than ts and tr=n2^{∗}T wherein n2 is an integer larger than 0 and smaller than n1;
(e) a combination of first step (c) and subsequently step (d) is repeated for N times wherein N is an integer larger than 1; and
(f) after step (e) the operation of the pump is continued so that the beverage is brewed from the interaction between the liquid and the ingredient in the brewing chamber and the brewed beverage flows from the brewing chamber via its outlet.

12. The machine according to claim 11, wherein the brewing chamber (8) comprises a cylinder (23) for being loaded with the ingredient (6) and a closing piston (24) for closing the cylinder (23).

13. The machine according to any preceding claims 11-12, wherein the machine is provided with a flowmeter (15) for measuring the flowrate of the liquid which is pumped by the pump (14) towards the inlet of the brewing chamber wherein the flowmeter is communicatively connected to the control circuitry (21) for submitting, in use, a signal to the control circuitry representing the measured flowrate, wherein the control circuitry is arranged to control the pump, in use, such that in steps (b)-(f) a predetermined amount of liquid is pumped by the pump towards the inlet of the brewing chamber, and/or such that in step (b) a predetermined amount of liquid is pumped by the pump towards the inlet of the brewing chamber and/or such that in step (f) a predetermined amount of liquid is pumped by the pump towards the inlet of the brewing chamber.

14. The machine according to any preceding claims 11-13, wherein the brewing chamber is arranged to selectively being loaded with different ingredient amounts.

15. The machine according to any preceding claims 11-14, comprising at least one sensor for generating at least one signal which indicates the volume of the brewing chamber and/or the amount of ingredient that is loaded in the brewing chamber, wherein, in use, the signal is submitted to the control circuitry for controlling in dependence from the signal generated by the sensor the amount of liquid which is pumped during step (b) towards the inlet of the brewing chamber and/or the amount of liquid which is pumped during step (f) towards the inlet of the brewing chamber and/or the amount of liquid which is pumped during steps (b)-(f) towards the inlet of the brewing chamber.
